# EUROPEAN PATENT SPECIFICATION

(11) **EP 0 716 880 B1**
(45) Date of publication and mention of the grant of the patent: **23.12.1998**
(21) Application number: 95308365.6
(22) Date of filing: 22.11.1995
(51) Int. Cl.: B01J 2/04, A01N 25/14

(54) **Method for accelerating solidification of low melting point products**
Verfahren zur Beschleunigung der Erstarrung von Materialen mit niedrigem Schmelzpunkt
Méthode d'accélération de la solidification des matériaux à bas point de fusion

(30) Priority: 12.12.1994 US 353835
(43) Date of publication of application: 19.06.1996
(73) Proprietor: ROHM AND HAAS COMPANY, Philadelphia, Pennsylvania 19106-2399 (US)
(72) Inventor: McLaughlin, Adeline Francis, Southampton, New Jersey 08088 (US)
(74) Representative: Tanner, James Percival

(56) References cited:
- WO-A-95/26631
- DE-A- 1 442 813
- DE-A- 3 712 494
- GB-A- 2 088 274

## Description

This invention relates to a method for accelerating the solidification of low melting point products. More specifically this invention relates to a method for accelerating the solidification rate of low melting agrochemical products.

During the production and synthesis of many chemical products, a molten, viscous reaction product is obtained. In order to further process, react or package the reaction product, the molten product typically must be in a solid form. The rate at which the product solidifies is therefore very important in determining the rate at which product is produced. Unfortunately these molten, viscous products can take several days to solidify at room temperature.

Soviet Union Patent Application SU 681609, filed in 1986, discloses the accelerated crystallization of low melting pesticides by feeding a dispersed melt into a stream of particles flowing at a rate of 3-11 meters/second. While this method might accelerate the crystallization of the product, this procedure introduces an impurity, the particles, into the low melting point product.

Despite the teachings of the prior art, the solidification of molten products is still labor-intensive, time consuming and expensive. Accordingly, a need exists to provide a method to accelerate the solidification of low melting products without introduction of impurities or substrates.

The present invention provides a method for solidifying a low-melting product selected from myclobutanil, fenbuconazole, oxyfluorfen, isothiazolones, dithiopyr; thiazopyr, dicofol, and propanil, consisting of:
a) providing said low melting product in molten form by heating;
b) providing a stream of gas selected from nitrogen, carbon dioxide, air, ethane, propane and mixtures thereof;
c) contacting said molten low melting product and gas stream such that the low melting product is atomized in the gas stream; and
d) collecting the atomized low melting product in molten form and allowing the product to solidify.

As used throughout the present application, "solidification time" is defined as the time necessary to form a solid material from the molten starting material. While the solidified product often forms a well defined crystalline structure, the term "solidified" as used throughout the specification also includes solidified materials in a non-crystalline structure.

It has been surprisingly found that the atomized product will solidify at an accelerated rate compared to products which have not been atomized. The method of the present invention is not dependent on the size of the sample, or the content of the gas stream. Furthermore the atomization does not have to occur at elevated temperatures, unlike spray drying techniques. Unexpectedly it has also been found that the bulk density of the atomized material is similar to that obtained by conventional methods known in the art.

Preferably, the low-melting product solidifies at from 40 to 100°C, and most preferably solidifies at from 50 to 90°C.

The product to be solidified is in a molten, highly viscous form and is pumped or otherwise fed under pressure to an atomization nozzle. Preferably the product is heated to reduce the viscosity of the product, preferably to a viscosity of less than 0.1 Pa s (100 centipoise). The atomization nozzle contains ports in which a gas is provided to contact and atomize the molten product. The gas must be provided in an amount sufficient to atomize the molten product.

Preferably, the gas is an inert gas for flammability considerations, however, non-inert gases may be employed. Preferably the gas is air or nitrogen, with nitrogen being most preferred.

The volume and pressure of the gas which is to be delivered is dependent upon various factors including the weight and volume of product to be atomized and the configuration of the nozzle which is used to contact the gas and the product.

The gas flow rate must be sufficient atomize the product provided at the nozzle. Generally the ratio of the flowrate of gas to the flow rate of product must be greater than 24.97 x 10⁻³ standard cubic metres per minute of gas per kilogram per minute of product (0.4 standard cubic feet per minute of gas per pound per minute of product). Preferably more than 124.9 x 10⁻³ standard cubic metres per minute of gas per kilogram per minute of product (2 standard cubic feet per minute of gas per pound per minute of product), and most preferably greater than 249.7 x 10⁻³ standard cubic metres per minute of gas per kilogram per minute of product (4 standard cubic feet per minute of gas per pound per minute of product) is provided to atomize the product.

One method of controlling product flowrates provided to the atomization nozzle is to vary the pressure within the product feed tank. Generally the pressure within the product holding tank must be greater than 34.48 k Pa gauge (5 psig) to provide a sufficient flowrate of product to the atomization nozzle. Preferably the tank pressure is greater than 10 and most preferably from 137.9 to 379.2 k Pa gauge (20 to 55 psig). Other means for providing the molten product to the nozzle are known to those with skill in the art.

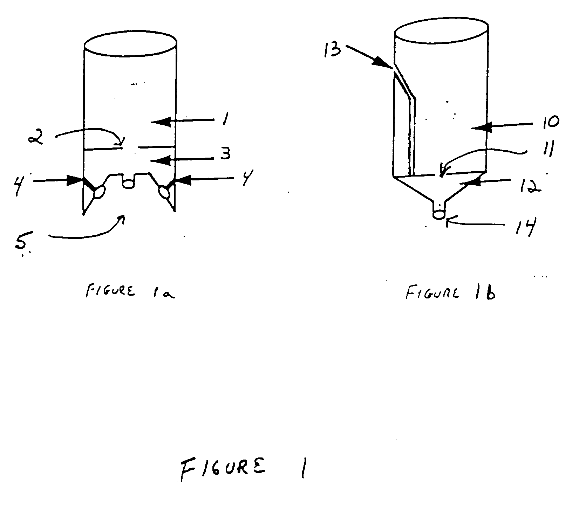

Two possible nozzle designs are depicted in Figures 1a and 1b. Figure 1a depicts an external nozzle design in which the gas contacts the product external of the nozzle structure. The molten product flows through the entrance of the nozzle (1), through an orifice (2) to enter the gas cap region (3). The gas is provided through one or more orifices (4) such that the gas contacts the molten product in an area external to the nozzle (5).

An internal nozzle design is depicted in Figure 1b. The molten product is provided to the entrance of the nozzle (10) through an orifice (11) to enter the gas cap region (12). The gas is then provided through one or more orifices (13) to contact the molten product within the gas cap region (12). The atomized product and gas exit the internal nozzle design through exit aperture (14).

Both internal and external nozzle designs are available from Spraying Systems Company of Wheaton, Illinois.

When an external nozzle is employed the flowrate of gas and the flowrate of product are independent of one another. The flowrate of the gas and the flowrate of the product can be independently set and the flowrates of the two streams do not have an effect on each other at the nozzle. When an internal nozzle is employed, the flowrate of the molten product is dependent on the gas flowrate available at the atomization nozzle. However, with an internal nozzle, the flow rate of the product and the gas flowrate at the nozzle are inversely related. Higher product flowrates at the nozzle reduces the gas flowrate.

It has been discovered that the atomization pressure has a substantial impact on the time required to solidify the product. Generally, atomization pressures of less than 41.37 k Pa gauge [6 pounds per square inch (psig)] are insufficient for substantially reducing solidification times. Preferably atomization pressures of at least 41.37 k Pa gauge (6 psig) are employed and preferably the atomization gas pressure is greater than 55.16 k Pa gauge (8 psig). Atomization gas pressures of from 68.95 to 137.9 k Pa gauge (10 to 20 psig) are most preferred.

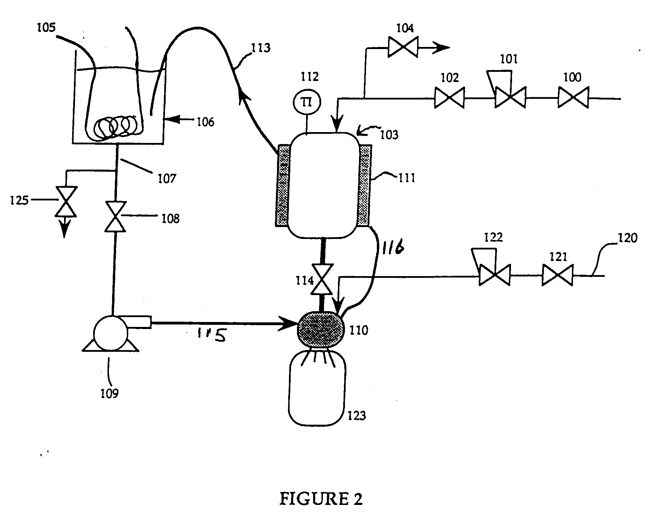

A process flow diagram of the apparatus used to carry out the present invention is depicted in Figure 2. A pressurized gas, such as nitrogen, is provided to the valve (100) to a pressure regulator (101) through a second valve (102) and into a jacketed feed tank (103). A vent valve (104) is normally closed during operation of the equipment. A heating source (105), such as steam, is provided to heat a heat transfer fluid, such as water in a heat transfer fluid tank (106). The steam may contact the water directly or a coil may be employed for providing the heat transfer. The heat transfer fluid is fed through line (107) through valve (108) to a circulation pump (109) to the jacket side (111) of the feed tank (103) through lines 115 and 116 to maintain the contents of the vessel at a substantially uniform temperature. The discharge valve (114) is opened when the feed tank is at the desired pressure and the molten product is delivered to the jacketed atomizing nozzle (110).

The atomizing gas, such as nitrogen, is supplied through line (120) through valve (121) to a pressure regulator (122) and then to the atomizing nozzle (110). The atomized product is collected in a suitable collection device (123). The heat transfer fluid tank drain valve (125) is normally closed during operation of the system. The heat transfer fluid is supplied to a jacket around the nozzle (110) through line 115and then to the jacket (111) of the feed tank through line 116. A thermocouple (112) or other suitable temperature monitoring device is employed to maintain the contents of the feed tank at a constant temperature. The heat transfer fluid is returned to storage tank through line (113). For the sake of simplicity, all the piping and instrumentation necessary to operate the process is not depicted in Figure 2. Piping and instrumentation modifications and other possible configurations of the process are known to those with skill in the art.

In addition to increasing the rate at which the product solidifies it has been surprisingly and unexpectedly been discovered that the bulk density of the product is not adversely effected. Previously, it was thought that atomization of the product would create hollow spaces within the solidified product thereby significantly reducing the bulk density of the product. Without wishing to be bound by any theory, the gas is believed to accelerate the formation of initial crystal seed particles. The formation of the seed particle is thought to be similar to a rate determining step in a chemical reaction. Seed particles provide a nucleation site from which the product will quickly solidify. It is the formation of the seed particle which determines the rate of solidification.

Some embodiments of the present invention will now be described in detail in the following Examples.

### Example 1

Molten myclobutanil (technical grade) was heated to and maintained at about 90-100 °C in a 7.57 litres (2 gallon) feed tank. At the outlet of the feed tank an external atomization nozzle with a nitrogen supply connected to it was provided. The feed tank was pressurized to 137.9 k Pa gauge [20 pounds per square inch (psig)] to provide the myclobutanil concentrate to the nozzle. Nitrogen was also supplied at 68.95 k Pa gauge (10 psig) through the nozzle. The atomized sample had completely solidified within 24 hours. A second sample of untreated myclobutanil concentrate required about 170 hours to solidify.

### Example 2

Oxyfluorfen (technical grade) was melted and maintained in a feed tank at 91 °C. An internal atomization nozzle with a nitrogen source was provided at the outlet of the feed tank. The feed tank and oxyfluorfen contents were pressurized to 68.95 k Pa gauge (10 psig) to deliver the oxyfluorfen to the atomization nozzle. Nitrogen was also supplied to the atomization nozzle at 82.74 k Pa gauge (12 psig). The oxyfluorfen was atomized by the nitrogen source and then collected. After two hours the atomized sample had completely solidified whereas after 2.5 hours a sample of the non-atomized oxyfluorfen was approximately 80% solidified.

### Example 3

The effect tank pressure and atomization pressure had on myclobutanil (technical grade) solidification was studied using equipment similar to that described in Example 1. Nitrogen was used to both pressurize the feed tank and to atomize the myclobutanil which was held at about 95 °C before atomization.

| Tank Pressure k Pa gauge (psig) | Atomization Pressure k Pa gauge (psig) | Solidification Time (hours to 100% solidification) |
|---|---|---|
| 68.95(10) | 13.79(2) | 170 |
| 68.95 (10) | 41.37 (6) | 170 |
| 68.95 (10) | 68.95 (10) | 20 |
| 68.95 (10) | 96.53 (14) | 20 |
| 137.9 (20) | 13.79 (2) | 95 |
| 137.9 (20) | 41.37 (6) | 95 |
| 137.9 (20) | 68.95 (10) | 20 |
| 137.9 (20) | 96.53 (14) | 18 |
| 379.2 (55) | 13.79 (2) | 95 |
| 379.2 (55) | 27.58 (4) | 95 |
| 379.2 (55) | 68.95 (10) | 20 |
| 379.2 (55) | 96.53 (14) | 20 |

Nitrogen atomization pressure had a significant effect on the time to complete solidification, with higher pressures enhancing the rate. The tank pressure had some effect on the solidification rate, but it is not as significant effect as the atomization pressure.

## Claims

1. A method for solidifying a low-melting product selected from myclobutanil, fenbuconazole, oxyfluorfen, isothiazolones, dithiopyr; thiazopyr, dicofol, and propanil, consisting of:
a) providing said low melting product in molten form by heating;
b) providing a stream of gas selected from nitrogen, carbon dioxide, air, ethane, propane and mixtures thereof;
c) contacting said molten low melting product and gas stream such that the low melting product is atomized in the gas stream; and
d) collecting the atomized low melting product in molten form and allowing the product to solidify.

2. A method as claimed in claim 1, wherein the low melting product is myclobutanil.

3. A method as claimed in claim 1 or claim 2, wherein the gas stream is air, nitrogen or a mixture thereof.

4. A method as claimed in claim 3, wherein the gas stream is nitrogen.

5. A method as claimed in any preceding claim, wherein the contact between the gas and the molten low melting product occurs within a spray nozzle.

6. A method as claimed in any preceding claim, wherein the step of providing the low melting product in molten form comprises heating the low melting product so that it has a viscosity of less than 0.1 Pa s (100 centipoise).

## Patentansprüche

1. Verfahren zum Verfestigen eines niedrigschmelzenden Produkts, ausgewählt aus Myclobutanil, Fenbuconazol, Oxyfluorfen, lsothiazolen, Dithiopyr; Thiazopyr, Dicofol und Propanil, bestehend aus:
a) dem Bereitstellen des niedrigschmelzenden Produkts in geschmolzener Form durch Erwärmen;
b) dem Bereitstellen eines Gasstromes, ausgewählt aus Stickstoff, Kohlendioxid, Luft, Ethan, Propan und Gemischen davon;
c) dem Inkontaktbringen des geschmolzenen, niedrigschmelzenden Produkts und des Gasstroms derart, daß das niedrigschmelzende Produkt in dem Gasstrom zerstäubt wird; und
d) dem Sammeln des zerstäubten, niedrigschmelzenden Produkts in geschmolzener Form und dem Zulassen, daß das Produkt sich verfestigt.

2. Verfahren nach Anspruch 1, wobei das niedrigschmelzende Produkt Myclobutanil ist.

3. Verfahren nach Anspruch 1 oder 2, wobei der Gasstrom Luft, Stickstoff oder ein Gemisch davon ist.

4. Verfahren nach Anspruch 3, wobei der Gasstrom Stickstoff ist.

5. Verfahren nach einem vorhergehenden Anspruch, wobei der Kontakt zwischen dem Gas und dem geschmolzenen, niedrigschmelzenden Produkt innerhalb einer Sprühdüse auftritt.

6. Verfahren nach einem vorhergehenden Anspruch, wobei der Schritt des Bereitstellens des niedrigschmelzenden Produkts in geschmolzener Form das Erwärmen des niedrigschmelzenden Produkts umfaßt, so daß es eine Viskosität von weniger als 0,1 Pa·s (100 Centipoise) aufweist.

## Revendications

1. Procédé pour solidifier un produit à bas point de fusion choisi parmi le myclobutanil, le fenbuconazole, l'oxyfluorfen, les isothiazolones, le dithiopyr, le thiazopyr, le dicofol, et le propanil, consistant à :
a) disposer dudit produit à bas point de fusion sous forme fondue par chauffage;
b) disposer d'un courant de gaz choisi parmi l'azote, le dioxyde de carbone, l'air, l'éthane, le propane et leurs mélanges ;
c) mettre en contact ledit produit à bas point de fusion fondu et ledit courant de gaz de façon que le produit à bas point de fusion soit atomisé dans le courant de gaz : et
d) recueillir le produit à bas point de fusion atomisé sous forme fondue et laisser le produit solidifier.

2. Procédé selon la revendication 1, dans lequel le produit à bas point de fusion est le myclobutanil.

3. Procédé selon la revendication 1 ou 2, dans lequel le courant de gaz est de l'air, de l'azote ou un de leurs mélanges.

4. Procédé selon la revendication 3, dans lequel le courant de gaz est de l'azote.

5. Procédé selon l'une quelconque des revendications précédentes, dans lequel le contact entre le gaz et le produit à bas point de fusion fondu se produit à l'intérieur d'une buse de pulvérisation.

6. Procédé selon l'une quelconque des revendications précédentes, dans lequel l'étape consistant à disposer du produit à bas point de fusion sous forme fondue comprend le chauffage du produit à bas point de fusion de façon qu'il ait une viscosité inférieure à 0,1 Pa.s (100 centipoises).
